# EUROPÄISCHE PATENTSCHRIFT

(11) **EP 1 801 383 B1**
(45) Veröffentlichungstag und Bekanntmachung des Hinweises auf die Patenterteilung: **19.06.2013**
(21) Anmeldenummer: 06024094.2
(22) Anmeldetag: 21.11.2006
(51) Int. Cl.: F02B 37/007, F02B 37/013, F02B 37/12, F02B 37/16

(54) **Brennkraftmaschine mit Registeraufladung**
Internal combustion engine with register charging
Moteur à combustion interne doté d'un chargement de registre

(30) Priorität: 22.12.2005 DE 102005061649
(43) Veröffentlichungstag der Anmeldung: 27.06.2007
(73) Patentinhaber: Volkswagen Aktiengesellschaft, 38440 Wolfsburg (DE)
(72) Erfinder: Kühlmeyer, Jens, 38518 Gifhorn (DE); Becker, Jürgen, 38440 Wolfsburg (DE); Pott, Ekkehard, 38518 Gifhorn (DE); Hagelstein, Dirk, 38110 Braunschweig (DE)

(56) Entgegenhaltungen:
- EP-A- 0 166 869
- GB-A- 2 005 765
- GB-A- 2 015 644

## Beschreibung

Die Erfindung betrifft eine Brennkraftmaschine, insbesondere für ein Kraftfahrzeug, mit wenigstens einem ersten Abgasturbolader, welcher wenigstens eine erste Turbine und wenigstens einen ersten Verdichter aufweist, wenigstens einem zweiten Abgasturbolader, welcher wenigstens eine zweite Turbine und wenigstens einen zweiten Verdichter aufweist, gemäß dem Oberbegriff des Patentanspruchs 1. Die Erfindung betrifft ferner ein Verfahren zum Betreiben einer Brennkraftmaschine, insbesondere für ein Kraftfahrzeug, wobei während des Betriebs der Brennkraftmaschine eine Turbine eines ersten Abgasturboladers permanent mit Abgas beaufschlagt wird und eine Turbine eines zweiten Abgasturboladers wahlweise in Abhängigkeit von einem Betriebszustand der Brennkraftmaschine mit Abgas beaufschlagt wird, gemäß dem Oberbegriff des Patentanspruchs 11.

Bei einer so genannten Registeraufladung an einem Verbrennungsmotor sind mindestens zwei Abgasturbolader (ATL) vorgesehen, die durch mindestens ein zusätzliches Schaltelement auf der Abgas- und Frischluftseite miteinander betriebspunktabhängig mit Abgas bzw. Luft beaufschlagt werden.

Speziell für die Registeraufladung an einem Ottomotor sind solche Registerkonzepte geeignet, die bei kleinen Motordrehzahlen einen ATL alleine beaufschlagen und für den Nennleistungsbereich einen zweiten ATL zuschalten, ohne auf die Verdichtungsarbeit des ersten ATL zu verzichten, d.h. der erste ATL trägt weiterhin einen sehr großen Teil zur gesamten Aufladearbeit bei. Mit einem solchen Konzept ist es möglich, den bei Ottomotoren sehr breiten Luftmassenstrombedarf optimal abzudecken. Da bei einer Lastanforderung im unteren Luftmassenstrombedarf des Motors die gesamte zur Verfügung stehende Abgasenergie nur einem ATL zur Verfügung gestellt wird, kann dieser sehr schnell auf seine Betriebsdrehzahl beschleunigt werden und somit auch sehr schnell einen hohen Ladedruck bereit stellen, was gegenüber einem konventionellen Mono- oder Twinturbokonzept zu einem überlegenen Ansprechverhalten führt. Bei einem konventionellen Monoturbokonzept muss der ATL in der Lage sein, die Nennleistung des Motors alleine abzudecken, weshalb er entsprechend groß ausgelegt werden muss. Dies ermöglicht zwangsläufig nur ein entsprechend träges Ansprechverhalten bei geringen Abgasmassenströmen, wie sie bei kleinen Motordrehzahlen vorliegen. Bei einem klassischen Twin- bzw. Biturbokonzept muss die zur Verfügung stehende Abgasenergie auch bei kleinen Abgasmassenströmen, d.h. geringen Motordrehzahlen, auf zwei ATL's aufgeteilt werden.

Das für einen Ottomotor vorteilhafte Registerkonzept zeichnet sich also dadurch aus, dass es über zwei ATL's verfügt, die in ihrer Auslegung (Druckverhältnisse, Massen-/Volumendurchsätzvermögen, etc.) einer konventionellen Twinturboauslegung recht ähnlich oder auch identisch sind. Zweckmäßigerweise wird dabei ausgehend von der für den konventionellen Twinturbobetrieb optimalen ATL-Auslegung ein ATL etwas kleiner und der zweite ATL etwas größer gewählt. Die Beaufschlagung der ATL's mit Abgas erfolgt beim Registerkonzept derart, dass bei kleinen Abgasmassenströmen (kleine Motordrehzahlen) über eine schaltbare Rohrführung im Abgaskrümmer lediglich einer der beiden ATL's mit dem gesamten zur Verfügung stehenden Abgas beaufschlagt wird. Gelangt dieser ATL an sein maximales Durchsatzvermögen (was ungefähr bei mittleren Motordrehzahlen der Fall ist), erfolgt die Zuschaltung des zweiten ATL und das Registersystem wird bis zur Nennleistung analog einem konventionellen Twinturbosystem betrieben. Je nach Auslegung des Systems teilen sich die beiden ATL's den erforderlichen Massenstrom im Nennpunkt mit ca. 40% zu 60% oder ca. 45% zu 55% zugunsten des größeren ATL. Eine für dieses System notwendige abgasseitige Verschaltung der Turbinen ist beispielsweise aus der DE 198 37 978 A1 bekannt.

Allerdings kann der Ein-ATL-Betrieb in einem Registersystem der oben beschriebenen Art bei weitem nicht den Luftmassenstrombedarf des Motors im mittleren und oberen Drehzahlbereich bedienen, weshalb eine Zuschaltung des zweiten ATL notwendig ist. Im Gegensatz zu einer Umschaltung - d.h. der erste kleine ATL (die sog. Hochdruckstufe) wird abgeschaltet und der größere ATL (die Niederdruckstufe) übernimmt vollständig die Aufladearbeit - auf einen größeren ATL, ist die Zuschaltung eines zweiten ATL schwieriger zu beherrschen. Eine Umschaltung bringt, wie schon oben beschrieben, den Nachteil mit sich, dass dieser ATL sehr groß dimensioniert werden muss, damit er den Luftmassenbedarf im Nennleistungspunkt des Motors alleine liefern kann. Dies führt zu entsprechenden Packagenachteilen. Zudem ist die Verfügbarkeit von ATL für ottomotorische Anwendungen insbesondere mit Nennleistungen oberhalb von 200kW und Abgastemperaturen > 950°C begrenzt. Auch vor diesem Hintergrund ist die Zuschaltung eines zweiten ATL für ein Ottoregisterkonzept zielführender.

Aus der DE 43 10 148 C2 ist eine Brennkraftmaschine mit Registeraufladung bekannt, wobei ein erster Abgasturbolader ständig Ladeluft liefert und ein zweiter Abgasturbolader wahlweise zugeschaltet wird. Um ein pulsationsfreies Zuschalten des zweiten Abgasturboladers zu ermöglichen wird in dem Fall, in dem der zweite Abgasturbolader nicht zur Ladeluftversorgung der Brennkraftmaschine beiträgt, ein Druckausgang eines Verdichters des zweiten Abgasturboladers mit dem Einlasse einer Turbine dieses zweiten Abgasturboladers verbunden. Auf diese Weise wird der zweite Abgasturbolader ständig auf einer Drehzahl gehalten, die er zur Ladeluftversorgung der Brennkraftmaschine benötigt, so dass beim Zuschalten des zweiten Abgasturboladers durch Abtrennen des Druckausgangs des Verdichters des zweiten Abgasturboladers vom Einlasse der Turbine dieses zweiten Abgasturboladers und Verbinden des Druckausgangs des Verdichters des zweiten Abgasturboladers mit der zur Brennkraftmaschine führenden Verbrennungsluftversorgungsleitung ohne Drucksprung sofort der benötigte Ladeluftdruck vorhanden ist.

Aus der EP 0 166 869 A1 ist eine gattungsgemäße Brennkraftmaschine bekannt. Hierbei ist ein Druckausgang eines zweiten Verdichters eines zweiten Abgasturboladers über eine erste Leitung mit einem Druckausgang eines ersten Verdichters und über eine zweite Leitung mit dem Saugeingang des ersten Verdichters verbunden. In der ersten Leitung ist eine erste Ventileinrichtung vorgesehen und in der zweiten Leitung eine zweite Ventileinrichtung. Die Steuerung der beiden genannten Ventile wird in der nachfolgend beschriebenen Art und Weise vorgenommen. In einem unteren Drehzahlbereich der Brennkraftmaschine ist die erste Ventileinrichtung geschlossen, so dass das gesamte Abgas zur Turbine des ersten Abgasturboladers geleitet wird. Somit wird der zweite Abgasturbolader nicht mit Abgas beaufschlagt. Der dabei vom Verdichter aufgebrachte Ladedruck hält ein Rückschlagventil geschlossen, so dass die Ladeluft nicht über den Verdichter des zweiten Turboladers entweichen kann. Ab einer bestimmten Drehzahlgrenze wird die erste Ventileinrichtung etwas geöffnet, so dass ein Teil der Abgase zur Turbine des zweiten Abgasturboladers gelangt und der von dieser Turbine angetriebene Verdichter gegen das erwähnte Rückschlagventil fördert. Parallel zu dem erwähnten Rückschlagventil ist in einer Bypass-Leitung ein Belüftungsventil gelegt, um zu vermeiden, dass der Verdichter seine Pumpgrenze überschreitet. Das Belüftungsventil wird durch die Druckdifferenz vor und hinter dem Rückschlagventil geschaltet. Wird eine bestimmte Druckdifferenz unterschritten, schließt das Belüftungsventil, so dass durch einen sich dabei einstellenden, sprunghaften Druckanstieg vor dem Rückschlagventil auf einen Betrieb mit zwei Turboladern umgeschaltet wird.

Somit kommt es in Abhängigkeit der vorgeschriebenen Druckverhältnisse zu einem schlagartigen Einsetzen des zweiten Abgasturboladers, wobei dieser über eine welches von einem Fahrer eines mit einer solchen Brennkraftmaschine ausgestatten Kraftfahrzeuges als unerwünschter Drehmomentsprung empfunden werden kann. Der gesamte Abgasstrom der Brennkraftmaschine wird dabei ohne Trennung der Abgasfluten durch die erste Ventileinrichtung zum zweiten Abgasturbolader gefördert.

Der Erfindung liegt die Aufgabe zugrunde, eine Brennkraftmaschine und ein Verfahren zum Betreiben dieser hinsichtlich des Betriebsverhaltens beim Zuschalten eines weiteren Abgasturboladers zu verbessern.

Diese Aufgabe wird erfindungsgemäß durch eine Brennkraftmaschine der o.g. Art mit den in Anspruch 1 gekennzeichneten Merkmalen und durch ein Verfahren der o.g. Art mit in Anspruch 11 gekennzeichneten Merkmalen gelöst. Vorteilhafte Ausgestaltungen der Erfindung sind in den weiteren Ansprüchen beschrieben,

Bei einer Brennkraftmaschine der o.g. Art ist es erfindungsgemäß vorgesehen, dass ein Druckausgang des zweiten Verdichters des zweiten Abgasturboladers über wenigstens eine erste Leitung mit einem Druckausgang des ersten Verdichters des ersten Abgasturboladers und über wenigstens eine zweite Leitung mit einem Saugeingang des ersten Abgasturboladers verbunden ist, wobei in der ersten Leitung wenigstens eine erste Ventileinrichtung und in der zweiten Leitung wenigstens eine zweite Ventileinrichtung angeordnet ist, wobei die erste Ventileinrichtung derart ausgebildet ist, dass diese die erste Leitung verschließt, wenn ein Ladeluftdruck am Druckausgang des zweiten Verdichters des zweiten Abgasturboladers kleiner ist als ein Ladeluftdruck am Druckausgang des ersten Verdichters des ersten Abgasturboladers und die erste Leitung öffnet, wenn ein Ladeluftdruck am Druckausgang des zweiten Verdichters des zweiten Abgasturboladers gleich oder größer Ist als ein Ladeluftdruck am Druckausgang des ersten Verdichters des ersten Abgasturboladers und wobei die zweite Ventileinrichtung derart ausgebildet ist, dass diese die zweite Leitung öffnet, wenn ein Ladeluftdruck am Druckausgang des zweiten Verdichters des zweiten Abgasturboladers kleiner ist als ein Ladeluftdruck am Druckausgang des ersten Verdichters des ersten Abgasturboladers und die zweite Leitung verschließt, wenn ein Ladeluftdruck am Druckausgang des zweiten Verdichters des zweiten Abgasturboladers gleich oder größer ist als ein Ladeluftdruck am Druckausgang des ersten Verdichters des ersten Abgasturboladers.

Dies hat den Vorteil, dass der zweite Abgasturbolader ohne spürbaren Ladedruckeinbruch bzw. ohne Drehmomentschwankungen zugeschaltet werden kann, wenn ein Luftmassenstrombedarf der Brennkraftmaschine nicht mehr durch den ersten Abgasturbolader allein bedient werden kann, da der Druckausgang des zweiten, zuzuschaltenden Abgasturboladers erst dann über die erste Leitung mit der Verbrennungsluftversorgung der Brennkraftmaschine verbunden wird, wenn der zweite Abgasturbolader wenigstens den selben Ladeluftdruck erreicht hat, wie er bereits von dem ersten Abgasturbolader erzeugt wird. Während des Übergangs von dem Betrieb mit nur erstem Abgasturbolader zum Betrieb mit zwei parallel geschalteten Abgasturboladern, werden die Abgasturbolader in Reihe geschaltet.

In einer bevorzugten Ausführungsform umfasst die zweite Ventileinrichtung ein Drosselelement mit Abdeckklappe, wobei die Abdeckklappe derart angeordnet und ausgebildet ist, dass diese eine Öffnung des Drosselelementes wahlweise öffnet oder verschließt, und die zweite Ventileinrichtung ein Drosselelement mit Abdeckklappe, wobei die Abdeckklappe derart angeordnet und ausgebildet ist, dass diese eine Öffnung des Drosselelementes wahlweise öffnet oder verschließt, wobei die erste Ventileinrichtung und die zweite Ventileinrichtung derart miteinander, insbesondere mechanisch, gekoppelt sind, dass die zweite Ventileinrichtung die zweite Leitung verschließt, wenn die erste Ventileinrichtung die erste Leitung öffnet und die zweite Ventileinrichtung die zweite Leitung öffnet, wenn die erste Ventileinrichtung die erste Leitung verschließt.

Beispielsweise umfasst die mechanische Kopplung der ersten und zweiten Ventileinrichtung eine um ein festes Schwenkgelenk schwenkbar gelagerte Welle, an deren Enden jeweils die erste bzw. zweite Ventileinrichtung angeordnet ist.

Zur Unterstützung der Bewegung des Koppelelementes für eine funktionssichere Betätigung des ersten und zweiten Ventilelementes ist das Koppelelement mit einem Stellelement verbunden, welches derart ausgebildet und angeordnet ist, dass dieses Stellelement entweder nur die Endanschläge des Koppelelementes sichert und/oder die Bewegung des Koppelelementes zum Öffnen bzw. Schließen des ersten und zweiten Ventilelementes unterstützt.

Dieses Stellelement ist beispielsweise ein Aktuator, insbesondere eine pneumatische Hubdose, ein E-Steller oder ein Magnetschalter.

Um ein entsprechendes Stellsignal zum Öffnen bzw. Schließen des ersten und zweiten Ventilelementes zu erhalten ist in einer bevorzugten Ausführungsform in der ersten Leitung beidseits des ersten Ventilelements jeweils ein Drucksensor angeordnet.

Zum wahlweise Beaufschlagen der zweiten Turbine des zweiten Abgasturboladers mit Abgas ist in einem Abgaskanal der Brennkraftmaschine stromauf der ersten Turbine des ersten Abgasturboladers wenigstens eine Abzweigung angeordnet, die mit der zweiten Turbine des zweiten Abgasturboladers verbunden ist, wobei an der Abzweigung wenigstens eine Schaltklappe derart angeordnet und ausgebildet ist, dass diese wahlweise den Abgaskanal entweder nur mit der ersten Turbine oder sowohl mit der ersten Turbine als auch über die Abzweigung mit der zweiten Turbine verbindet.

Bei einem Verfahren der o.g. Art ist es vorgesehen, dass ein Druckausgang eines Verdichters des zweiten Abgasturboladers entweder mit einem Saugeingang eines Verdichters des ersten Abgasturboladers verbunden wird, wenn ein Ladeluftdruck am Druckausgang des Verdichters des zweiten Abgasturboladers kleiner ist als ein Ladeluftdruck an einem Druckausgang des Verdichters des ersten Abgasturboladers, oder mit dem Druckausgang des Verdichters des ersten Abgasturboladers verbunden wird; wenn ein Ladeluftdruck am Druckausgang des Verdichters des zweiten Abgasturboladers gleich oder größer ist als ein Ladeluftdruck am Druckausgang des Verdichters des ersten Abgasturboladers.

Dies hat den Vorteil, dass der zweite Abgasturbolader ohne spürbaren Ladedruckeinbruch bzw. ohne Drehmomentschwankungen zugeschaltet werden kann, wenn ein Luftmassenstrombedarf der Brennkraftmaschine nicht mehr durch den ersten Abgasturbolader allein bedient werden kann, da der Druckausgang des zweiten, zuzuschaltenden Abgasturboladers erst dann über die erste Leitung mit der Verbrennungsluftversorgung der Brennkraftmaschine verbunden wird, wenn der zweite Abgasturbolader wenigstens den selben Ladeluftdruck erreicht hat, wie er bereits von dem ersten Abgasturbolader erzeugt wird. Während des Übergangs von dem Betrieb mit nur erstem Abgasturbolader zum Betrieb mit zwei parallel geschalteten Abgasturboladem, werden die Abgasturbolader in Reihe geschaltet.

Zweckmäßigerweise wird die Turbine des zweiten Abgasturboladers mit Abgas beaufschlagt, wenn ein Luftmassenstrombedarf der Brennkraftmaschine nicht mehr allein von dem ersten Abgasturbolader bedient werden kann.

Die Erfindung wird im Folgenden anhand der Zeichnung näher erläutert. Diese zeigt in
- Fig. 1: eine bevorzugte Ausführungsform einer erfindungsgemäßen Brennkraftmaschine in schematischer Darstellung,
- Fig. 2: einen vergrößerten Ausschnitt der Darstellung von Fig. 1 mit Ventileinrichtungen in einer ersten Stellung,
- Fig. 3: den vergrößerten Ausschnitt von Fig. 2 mit Ventileinrichtungen in einer zweiten Stellung,
- Fig. 4: die Ventileinrichtungen mit Kopplungsmittel in einem Querschnitt,
- Fig. 5: eine Schnittansicht gemäß der Linien A-A und B-B von Fig. 4,
- Fig. 6: die Ventileinrichtungen mit Kopplungsmittel und einem Aktuator oder einer Endanschlagsicherung in einem Querschnitt,
- Fig. 7: eine Schnittansicht gemäß der Linien C-C von Fig. 6 mit einem pneumatischen oder elektrischen Aktuator und
- Fig. 8: eine Schnittansicht gemäß der Linien C-C von Fig. 6 mit einer Endanschlagsicherung in Form eines Elektromagneten.

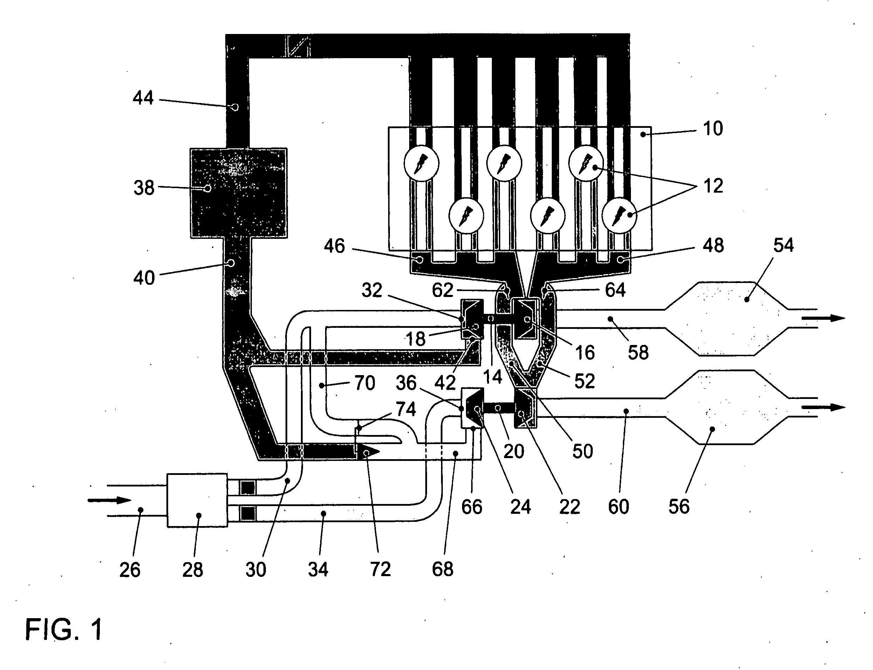

Die In den Fig. 1 bis 3 dargestellte, bevorzugte Ausführungsform einer erfindungsgemäßen Brennkraftmaschine umfasst einen Motorblock 10 mit Arbeitszylindern 12, einen ersten Abgasturbolader (ATL) 14 mit einer ersten Turbine 16 und einem ersten Verdichter 18, einen zweiten Abgasturbolader 20 mit einer zweiten Turbine 22 und einem zweiten Verdichter 24, ein Verbrennungsluftansaugrohr 26, einen Luftfilter 28, ein erstes Frischluftrohr 30, welches den Luftfilter 28 mit einem Saugeingang 32 des ersten Verdichters 18 des ersten Abgasturboladers 14 verbindet, ein zweites Frischluftrohr 34, welches den Luftfilter 28 mit einem Saugeingang 36 des zweiten Verdichters 24 des zweiten Abgasturboladers 20 verbindet, einen Ladeluftkühler 38, ein erstes Ladeluftrohr 40, welches einen Druckausgang 42 des ersten Verdichters 18 des ersten Abgasturboladers 14 mit dem Ladeluftkühler 38 verbindet, ein zweites Ladeluftrohr 44, welches den Ladeluftkühler 38 mit den Arbeitszylindern 12 verbindet, einen ersten Abgaskrümmer 46 und einen zweiten Abgaskrümmer 48, welche die Arbeitszylinder 12 mit der ersten Turbine 16 des ersten Abgasturboladers 14 permanent verbinden, eine erste Abgasleitung 50, welche den ersten Abgaskrümmer 46 mit der zweiten Turbine 22 des zweiten Abgasturboladers 20 verbindet, eine zweite Abgasleitung 52, welches den zweiten Abgaskrümmer 48 mit der zweiten Turbine 22 des zweiten Abgasturboladers 20 verbindet, einen ersten Katalysator 54, einen zweiten Katalysator 56, ein erstes Abgasrohr 58, welches die erste Turbine 16 des ersten Abgasturboladers 14 mit dem ersten Katalysator 54 verbindet, ein zweites Abgasrohr 60, welches die zweite Turbine 22 des zweiten Abgasturboladers 20 mit dem zweiten Katalysator 56 verbindet, eine erste Abgasklappe 62, welche den ersten Abgaskrümmer 46 wahlweise mit der ersten Abgasleitung 50 verbindet oder beide voneinander trennt, und eine zweite Abgasklappe 64, welche den zweiten Abgaskrümmer 48 wahlweise mit der zweiten Abgasleitung 52 verbindet oder beide voneinander trennt.

Es ist ein Druckausgang 66 des zweiten Verdichters 24 des zweiten Abgasturboladers 20 über eine erste Leitung 68 mit dem Druckausgang 42 des ersten Verdichters 18 des ersten Abgasturboladers 14 bzw. mit dem ersten Ladeluftrohr 40 verbunden. Weiterhin ist der Druckausgang 66 des zweiten Verdichters 24 des zweiten Abgasturboladers 20 über eine zweite Leitung 70 mit dem Saugeingang 32 des ersten Verdichters 18 des ersten Abgasturboladers 14 bzw. dem ersten Frischluftrohr 30 verbunden. In der ersten Leitung 68 ist eine erste Ventileinrichtung 72, 94 und in der zweiten Leitung 70 eine zweite Ventileinrichtung 74, 86, 92 angeordnet.

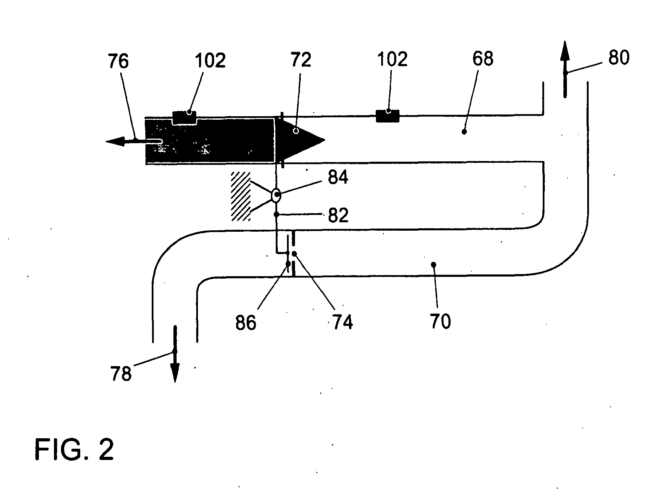

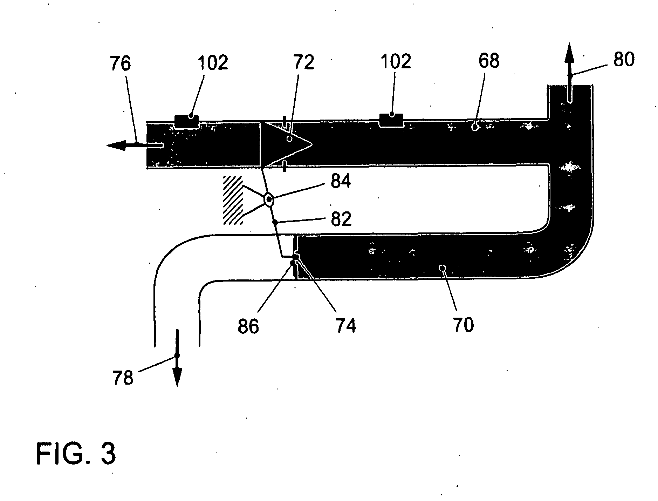

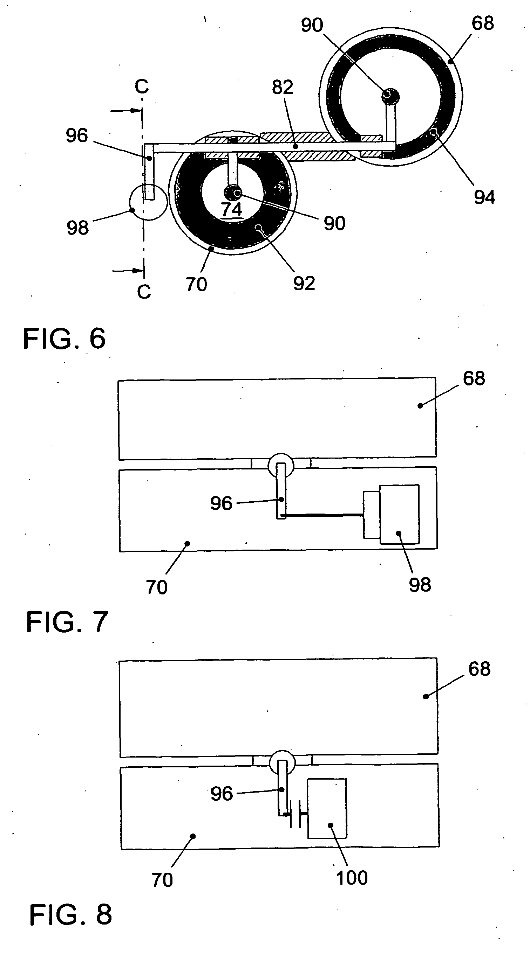

In den Fig. 2 und 3 weist ein Pfeil 76 in Richtung der Verbindung der ersten Leitung 68 mit dem Druckausgang 42 des ersten Verdichters 18 des ersten Abgasturboladers 14 bzw. mit dem ersten Ladeluftrohr 40, ein Pfeil 78 in Richtung der Verbindung der zweiten Leitung 70 mit dem Saugeingang 32 des ersten Verdichters 18 des ersten Abgasturboladers 14 bzw. mit dem ersten Frischluftrohr 30 und ein Pfeil 80 in Richtung des Druckausgangs 66 des zweiten Verdichters 24 des zweiten Abgasturboladers 20. Ein Koppelelement 82 verbindet die erste Ventileinrichtung 72 und die zweite Ventileinrichtung 74 mechanisch miteinander so dass die Ventileinrichtungen 72, 74 zusammen mit dem Koppelelement 82 ein Schaltelement bilden. Dieses Koppelement 82 ist um ein Schwenklager bzw. fest gelagerten Drehpunk 84 schwenkbar gelagert. Zur Unterstützung der Bewegung der Ventileinrichtungen 72, 74 bzw. der Schwenkbewegung des Koppelelementes 82 und/oder zum Sichern von Endanschlägen ist das Koppelelement 82 optional mit einem Aktuator und/oder einer Endanschlagsicherung verbunden, wie später unter Bezugnahme auf die Fig. 6 bis 8 noch näher erläutert wird.

In der beispielhaft dargestellten Ausführungsform einer erfindungsgemäßen Brennkraftmaschine ist die erste Ventileinrichtung 72 als strömungsgünstiges Rückschlagventil und die zweite Ventileinrichtung 74 als Drosselelement ausgebildet. Mit 86 ist eine Verschlussklappe des Drosselelementes 74 bezeichnet (Fig. 2 und 3).

Die beiden Abgasturbolader 14, 20 bilden einen Registerverbund. Der erste Abgasturbolader 14 ist hierbei ein ATL im Registerverbund, welcher sich immer im Betrieb befindet und bei kleinen Motordrehzahlen bzw. dynamischen Lastanforderungen die Aufladarbeit im Wesentlichen alleine verrichtet. Bei mittleren und hohen Motordrehzahlen wird der erste ATL 14 von dem zweiten ATL 20 unterstützt. Der zweite ATL kann größer, gleich groß oder kleiner ausgebildet sein als der erste ATL 14 und hat bei kleinen Motordrehzahlen keinen Anteil an der Aufladearbeit. Erst ab mittleren Motordrehzahlen wird dieser zweite ATL 20 zu dem ersten ATL 14 zugeschaltet.

Um einen spürbaren Drehmomenteinbruch des registeraufgeladenen Motors zu vermeiden, wird erfindungsgemäß vor dem Zuschalten des zweiten ATL 20 in einem Zuschaltvorgang am zuzuschaltenden zweiten ATL 20 das gleiche Verdichterdruckverhältnis aufgebaut, das der in Betrieb befindliche erste ATL 14 aufweist, d.h. ein konstanter Saugrohrdruck im ersten Ladeluftrohr 40 hergestellt, um eine konstante Momentabgabe des Motors zu erzielen.

Die oben dargstellte Verschaltung der ATL's 14, 20 auf der Frischluftseite zeichnet sich durch die zu einem Schaltelement kombinierten Ventileinrichtungen 72, 94 (Rückschlagventil) und 74, 86, 92 (Drosselelement) aus, die in den zwei Leitungen 68 und 70 platziert sind. Das Rückschlagventil 72 trennt die Druckseite 42 des ersten ATL 14 von der Druckseite 66 des zweiten ATL 20 in denjenigen Betriebsbereichen, in denen nur der erste ATL 14 in Betrieb ist. Gelangt der erste ATL 14 an seine Betriebsgrenzen, so wird der zweite ATL 20 zugeschaltet. Abgasseitig wird die zweite Turbine 22 des zweiten ATL 20 mit Abgas beaufschlagt, wodurch der zweite ATL 20 Drehzahl aufbaut. Der zweite Verdichter 24 des zweiten ATL 20 beginnt ein Druckverhältnis aufzubauen und der Druck am Verdichteraustritt 66 des zweiten ATL 20 nimmt zu. Da der Verdichter des ersten ATL 14 jedoch ein deutlich höheres Druckverhältnis in dem ersten Ladeluftrohr 40 erzeugt, bleibt das Rückschlagventil 72 aufgrund der dort anliegenden Druckdifferenz (Druck in Ladeluftrohr 40 ist großer als Druck in erster Leitung 68) geschlossen. Der ansteigende Druck nach (stromab) dem zweiten Verdichter 24 des zweiten ATL 20 wird somit über die offene Drosselstelle 74 über die zweite Leitung 70 entspannt, die über den zweiten Verdichter 24 des zweiten ATL 20 umgepumpte Luft wird gedrosselt wieder an den Saugeingang 32 des ersten Verdichters 18 der ersten ATL 14 zugeführt. Die Drosselstelle 74 ist dabei derart ausgelegt, dass die Steigung der Drosselkennlinie möglichst parallel zur Pumpgrenze des zweiten Verdichters 24 des zweiten ATL 20 verläuft. Durch den Verlauf der Drosselkennlinie wird die Betriebslinie des zweiten Verdichters 24 des zweiten ATL 20 terminiert. Dies gewährleistet bei entsprechender Auslegung der Drosselkennlinie einen sicheren Hochlauf des zweiten ATL 20, wobei sichergestellt ist, dass erstens der zweite Verdichter 24 des zweiten ATL 20 seine Pumpgrenze nicht überschreitet und zweitens der zweite ATL 20 bei geringst möglichen Volumenströmen hoch läuft, wodurch die geringst mögliche Leistungsaufnahme am Verdichterrad realisiert ist. Somit läuft der zweite Verdichter 24 des zweiten ATL 20 auf das Druckverhältnis des ersten Verdichters 18 des ersten ATL 14 unter optimalen Bedingungen hoch. Sobald am Druckausgang 66 des zweiten Verdichters 24 des zweiten ATL 20 das gleiche Druckverhältnis wie am ersten Verdichter 18 des ersten ATL 14 anliegt, herrscht am Rückschlagventil 72 ein Druckgleichgewicht (Druck in der ersten Leitung 68 Ist gleich dem Druck im ersten Ladeluttrohr 40) und dieses kann öffnen. Durch die mechanische Kopplung des Rückschlagventil 72 zur Drosselstelle 74 wird diese gleichzeitig verschlossen und beide Verdichter 18 und 24 fördern im klassischen Bi-Turbobetrieb die Luft zum Ladeluftkühler 38. Da am Rückschlagventil 72 die Bedingung Druckgleichgewicht auf beiden Seiten herrscht, was gleichbedeutend mit einem Druckgleichgewicht an beiden Verdichterausgängen 42, 66 ist, wird auch während des Zuschaltvorganges des zweiten ATL 20 ein konstanter Saugrohrdruck gewährleistet. Dies erzielt eine Zuschaltung des zweiten ATL 20 ohne Drehmomenteinbruch des Motors.

Das Schaltelement 72, 74 ist derart ausgebildet, dass bei gleichem Druck in der ersten Leitung 68 und dem ersten Ladeluftrohr 40 (zwangsläufig gegeben) die resultierende Kraft durch den Druck in der ersten Leitung 68 auf das Rückschlagventil 72 größer ist, als die resultierende Kraft durch den Druck in der zweiten Leitung 70 auf die Verschlussklappe 86 der Drossel 74, d.h. das Rückschlagventil 72 weist einen größeren Durchmesser (=größere Fläche) auf, als die Verschlussklappe 86 der Drossel 74. Der Drehpunkt 84 des Koppelelementes 82 zwischen Rückschlagventil 72 und der Verschlussklappe 86 der Drossel 74 kann dann mittig gewählt werden. Somit entsteht durch die wirkenden Kräfte bei der oben beschriebenen Auslegung des Schaltelementes 72, 74, 82, 86, 92, 94 ein Moment am Drehpunkt 84 in Richtung "Öffnen des Rückschlagventils 72", was gleichbedeutend Ist mit "Schließen der Drosselverschlussklappe 86". Diesem Moment wirken die resultierende Kräfte aufgrund des durch den ersten ATL 14 verursachten Drücke in dem ersten Ladeluftrohr 40 und erstem Frischluftrohr 30 entgegen. Da das erste Frischluftrohr 30 die Ansaugleitung des ersten ATL 14 bezeichnet, herrscht hier immer ein minimaler Unterdruck gegenüber dem Umgebungsdruck, d.h. die Beeinffussung des Momentes um den Drehpunkt 84 des Schaltelementes 72, 74, 82, 86, 92, 94 ist seitens des ersten ATL 14 nur durch den Druck im ersten Ladeluftrohr 40 möglich. Wird der zweiten Turbine 22 des zweiten ATL 20 Abgasmassenstrom durch Schließen der abgasseitigen Schaltelemente in Form der Abgasklappen 62 und 64 entzogen, kann der zweite Verdichter 24 des zweiten ATL 20 weniger Druck aufbauen und das Moment um das Schaltelement 72, 74, 82, 86, 92, 94 wird durch die Druckdifferenz in der ersten Leitung 86 und dem ersten Ladeluftrohr 40 bestimmt. Dies führt dazu, dass das Rückschlagventil 72 geschlossen und die Verschlussklappe 86 der Drossel 74 offen ist. Wird abgasseitig der zweiten Turbine 22 des zweiten ATL 20 durch zunehmendes Öffnen der Abgasklappen 62 und 64 zunehmend Abgas zugeführt, beispielsweise weil durch eine steigende Motordrehzahl mehr Abgasmassenstrom zur Verfügung steht, wird der zweite Verdichter 24 des zweiten ATL 20 den Druck in der ersten rund zweiten Leitung 68, 70 erhöhen, bis die Drücke in den beiden Leitungen 68, 70 einerseits sowie dem ersten Ladeluftrohr 40 andererseits gleich sind. Das Rückschlagventil 72 wird nun nur noch durch eine sehr geringe Kraft (resultierend aus der Druckdifferenz in der zweiten Leitung 70 und erstem Frischluftrohr 30 an der Verschlussklappe 86 der Drossel 74) geschlossen gehalten.

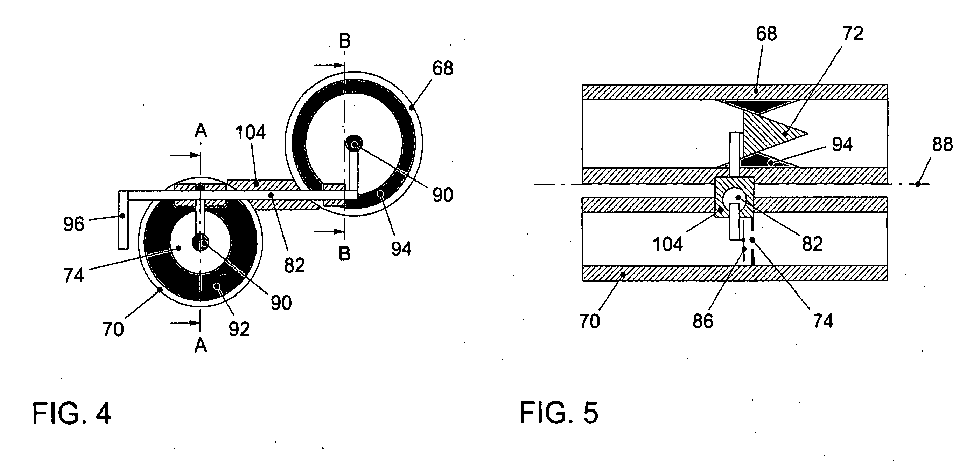

Aus Fig. 4 und 5 ist eine bevorzugte Ausführungsform der Anordnung und Ausbildung des Koppelelementes 82 ersichtlich. Hierbei bezeichnet in Fig. 5 eine strichpunktierte Linie 88 einen Übergang von der Schnittebene A-A von Fig. 4 zur Schnittebene B-B von Fig. 4. Das Koppelelement ist als fest gelagerte Welle 82 ausgebildet, wobei das Rückschlagventil 72 und die Verschlussklappe 86 der Drossel 74 an einem jeweiligen Ende der Welle 82 angeordnet und. über entsprechende Hebel an jeweiligen Befestigungspunkten 90 befestigt sind. Mit 92 ist eine Blende der Drosselstelle 74 bezeichnet. Für das Rückschlagventil 72 ist ein Sitzring 94 in der ersten Leitung 68 angeordnet. In der Darstellung von Fig. 4 ist die fest gelagerte Welle 82 unten aus der Zeichnungsebene heraus gehoben und des besseren Verständnisses wegen vor den übrigen Elementen der Zeichnung dargestellt. An einem freien Ende der Welle 82 ist ein Anlenkhebel 96 für einen Aktuator bzw. eine Endanschlagsicherung angeordnet. Die zwei Leitungen 68 und 70 sind im Bereich des Schaltelementes 72, 74, 82, 86, 92, 94 fest miteinander verbunden. In diesem Verbundstück 104 ist die Welle 82 gelagert, die auf jeder Seite in jeweils eine Leitung 68, 70 eindringt. Eine Dichtung zwischen Leitungsinnerem und Wellenlager Ist derart auszuführen, dass keine Gase aus dem Innern der Leitungen 68, 70 nach außen gelangen können, noch von außen Gase in das Innere der Leitungen 68, 70 eingesogen werden können. An den beiden in die Leitungen 68, 70 ragenden Wellenteilen ist jeweils über einen Hebelarm ein Verschlusselement 72, 74 des Schaltelementes angebracht. In der ersten Leitung 68 ist dies das strömungsgünstige Verschluss-/Rückechlagventil 72. Dieses Ventil 72 verschließt in Kombination mit dem ebenfalls strömungsoptimierten Sitz 94 die erste Leitung 68 von dem ersten Ladeluftrohr 40 immer dann, wenn nur der erste ATL 14 in Betrieb ist. Durch die strömungsgünstige Gestaltung dieses Verschlusselementes 72 wird ein möglichst geringer Druckverlust gewährleistet, wenn bei geöffnetem Ventil 72 beide ATL 14, 20 gemeinsam In Betrieb sind. Auf dem anderen Wellenende in der zweiten Leitung 70 befindet sich die Klappe 86 der Drosselstelle 74. Die Drosselstelle 74 selbst wird durch die ringförmige Blende 92 in der zweiten Leitung 70 ausgebildet. Die Klappe 86 verschließt die Drossel 74, 92, sobald in der ersten Leitung 68 das Verschluss-/Rückschlagventil 72 öffnet, da beide Verschlusselemente 72, 86 über die gemeinsame Welle 82 miteinander gekoppelt sind. Wie aus Fig. 4 ersichtlich, ist die Welle 82 auf einer Seite aus dem Leitungsverbund herausgeführt. An dem dort angebrachten weiteren Hebelarm 96 kann entweder ein aktiver Aktuator oder ein Element zur Endanschlagssicherung angelenkt werden.

Wie aus den Fig. 6 bis 8 ersichtlich, ist zur Unterstützung der Bewegung des Schaltelementes 72, 74, 82, 86, 92, 94 und/oder zum Sichern der Endanschläge das Koppelelement 82 über den Anlenkhebel 96 an einen Aktuator 98 (Fig. 6, 7), wie beispielsweise eine pneumatische Hubdose oder ein E-Steller, und/oder an eine Endanschlagsicherung 100, wie beispielsweise einen Magnetschalter (Fig. 8) angebunden. Es sind grundsätzlich zwei Arten einer solchen Bewegungsunterstützung denkbar: Erstens eine Unterstützung der Bewegung selbst und zweitens eine Fixierung der Endanschlagslage bei geöffnetem Rückschlagventil 72. Im Folgenden werden die beiden unterschiedlichen Arten der Bewegungsunterstützung bzw. Endanschlagsicherung des Schaltelementes erläutert

Möglichkeit 1: Die Drücke in der ersten Leitung 68 und dem ersten Ladeluftrohr 40 werden kontinuierlich durch Drucksensoren 102 (Fig. 2, 3) gemessen. Sobald eine Druckgleichheit erreicht ist, wird ein Stellglied 98 aktiviert, welches das geringe Restmoment (das, wie oben beschrieben, das Rückschlagventil noch geschlossen hält) überwindet und das Schaltelement "öffnet" (d.h. Rückschlagventil 72 = offen, Drossel 74 = verschlossen). Durch das Stellglied 98 lassen sich zudem die Endanschlagslagen des Schaltelementes 72, 74, 82, 86, 92, 94 zusätzlich sichern.

Möglichkeit 2: Es kommt kein aktives Stellglied zum Einsatz. Zur Überwindung des Restmomentes ist dann allerdings eine leichte Drucküherhöhung in der ersten Leitung 68 gegenüber dem ersten Ladeluftrohr 40 notwendig, um das Schaltelement 72, 74, 82, 86, 92, 94 in die Stellung "Offen" zu bewegen (d.h. Rückschlagventil 72 = offen, Drossel 74 = verschlossen). Durch einen Kontaktschalter, Magneten u.ä. kann die Endanschlagslage fixiert werden, um ein Rückschlagen des Schaltelements 72, 74, 82, 86, 92, 94 bei erfolgtem Druckausgleich zwischen erster Leitung 68 und dem Ladeluftrohr 40 zu verhindern. Erlaubt die ATL-Bestückung des Registersystems eine Auslegung des Schaltelementes 72, 74, 82, 86, 92, 94 in Bezug auf die strömungswirksamen Flächen an Rückschlagventil 72 und Drossel 74 bzw. Klappe 86 sowie der Anordnungen der Hebelarme zu Rückschlagventil 72 bzw. Drossel 74 bzw. Klappe 86 derart, dass die Momente um den Drehpunkt 84 durch die wirkenden Kräfte am Rückschlagventil 72 dominiert sind, kann auf eine Endanschlagsicherung, wie zuvor beschrieben, verzichtet werden. Das Schaltelement 72, 74, 82, 86, 92, 94 wird bei Druckgleichheit in der ersten Leitung 68 und dem ersten Ladeluftrohr 40 durch die Strömungskräfte am Rückschlagventil 72 offen gehalten, d.h. Rückschlagventil 72 = offen, Drossel 74 = verschlossen.

Das abgasseitige Schaltelement in Form der Abgasklappen 62, 64 (Fig. 1) zeichnet sich dadurch aus, dass die beiden als Krümmerhälften ausgebildeten Abgaskrümmer 46, 48 in jeweils eine Hälfte der zum ersten ATL 14 führenden Abgasleitung münden. Die beiden Hälften der Abgasleitung sind durch eine mittige Trennwand vollständig voneinander getrennt, wodurch verhindert wird, dass die Abgase der einen Krümmerhälfte mit denen der anderen Krümmerhälfte in Kontakt treten können. Dadurch wird auch ein Übersprechen der durch die Öffnung der einzelnen Auslassventile (nicht dargestellt) hervorgerufenen Druckwellen zur jeweils anderen Krümmer- und damit Motorenhälfte unterbunden. Das abgasseitige Schaltelement verfügt somit über zwei Klappen 62, 64, jeweils eine in jeder Hälfte der Abgasleitung 46, 48, die über einen Aktuator (nicht dargestellt) angesteuert werden. Durch die Verwendung zweier getrennter Klappen 62, 64 bleibt die Trennung der Abgasfluten 46, 48 auch bei geöffneten Klappen 62, 64 gewährleistet. Bei geschlossenen Klappen 62, 64 wird der gesamte Abgasmassenstrom und damit die gesamte Abgasenthalpie auf die erste Turbine 16 des ersten ATL 14 geleitet, der beispielsweise als TwinScroll-ATL ausgeführt ist. Erst mit zunehmender Öffnung der Abgasklappen 62, 64 wird zunehmend Abgas auf die zweite Turbine 22 des zweiten ATL 20 geleitet, womit der schon weiter oben beschriebene Zuschaltvorgang des zweiten ATL 20 eingeleitet wird. Der zweite ATL 20 ist beispielsweise ebenfalls als TwinScroll-ATL oder als herkömmlicher SingleScroll-ATL ausgebildet. Im Falle der Verwendung eines SingleScroll-ATL endet die Trennung der Abgasleitungen 46, 48 erst unmittelbar vor Eintritt in das Turbinengehäuse der zweiten Turbine 22 des zweiten ATL 20 aus.

## Patentansprüche

1. Brennkraftmaschine, insbesondere für ein Kraftfahrzeug, mit wenigstens einem ersten Abgasturbolader (14), welcher wenigstens eine erste Turbine (16) und wenigstens einen ersten Verdichter (18) aufweist, wenigstens einem zweiten Abgasturbolader (20), welcher wenigstens eine zweite Turbine (22) und wenigstens einen zweiten Verdichter (24) aufweist,
- wobei ein Druckausgang (66) des zweiten Verdichters (24) des zweiten Abgasturboladers (20) über wenigstens eine erste Leitung (68) mit einem Druckausgang (42) des ersten Verdichters (18) des ersten Abgasturboladers (14) und über wenigstens eine zweite Leitung (70) mit einem Saugeingang (32) des ersten Verdichters (18) des ersten Abgasturboladers (14) verbunden ist,
- wobei In der ersten Leitung (68) wenigstens eine erste Ventileinrichtung (72, 94) und in der zweiten Leitung (70) wenigstens eine zweite Ventileinrichtung (74, 86, 92) angeordnet ist,
- wobei die erste Ventileinrichtung (72, 94) derart ausgebildet ist, dass diese die erste Leitung (68) verschließt, wenn ein Ladeluftdruck am Druckausgang (66) des zweiten Verdichters (24) des zweiten Abgasturboladers (20) kleiner ist als ein Ladeluftdruck am Druckausgang (42) des ersten Verdichters (18) des ersten Abgasturboladers (14)
- und die erste Leitung (68) öffnet, wenn ein Ladeluftdruck am Druckausgang (66) des zweiten Verdichters (24) des zweiten Abgasturboladers (20) gleich oder größer ist als ein Ladeluftdruck am Druckausgang (42) des ersten Verdichters (18) des ersten Abgasturboladers (14) und
- wobei die zweite Ventileinrichtung (74, 86, 92) derart ausgebildet ist, dass diese die zweite Leitung (70) öffnet, wenn ein Ladeluftdruck am Druckausgang (66) des zweiten Verdichters (24) des zweiten Abgasturboladers (20) kleiner ist als ein Ladeluftdruck am Druckausgang (42) des ersten Verdichters (18) des ersten Abgasturboladers (14)
- und die zweite Leitung (70) verschließt, wenn ein Ladeluftdruck am Druckausgang (66) des zweiten Verdichters (24) des zweiten Abgasturboladers (20) gleich oder größer ist als ein Ladeluftdruck am Druckausgang (42) des ersten Verdichters (18) des ersten Abgasturboladers (14), wobei
- ein erster, vorzugsweise als Krümmerhälfte ausgebildeter Abgaskrümmer (46) und ein zweiter, vorzugsweise als Krümmerhälfte ausgebildeter Abgaskrümmer (48) die Arbeitszylinder (12) mit der ersten Turbine (16) des ersten Abgasturboladers (14) verbinden,
- und der erste Abgaskrümmer (46) über eine erste Abgasleitung (50) und der zweite Abgaskrümmer (48) über eine weite Abgasleitung (52) mit der zweiten Turbine (22) des zweiten Abgasturboladers (20) verbindbar ist, **dadurch gekennzeichnet,**
- **dass** eine erste Abgasklappe (62) vorgesehen ist, welche den ersten Abgaskrümmer (46) wahlweise mit der ersten Abgasleitung (50) verbindet oder beide (46,50) voneinander trennt und eine zweite Abgasklappe (64), welches den zweiten Abgaskrümmer (48) wahlweise mit der zweiten Abgasleitung (52) verbindet oder beide (48,52) voneinander trennt.

2. Brennkraftmaschine nach Anspruch 1, **dadurch gekennzeichnet, dass** die erste Ventileinrichtung ein Rückschlagventil (72, 94) umfasst, welches derart angeordnet und ausgebildet ist, dass das Rückschlagventil (72, 94) die erste Leitung (68) gegen eine Strömung in Richtung des Druckausgang (66) des Verdichters (24) des zweiten Abgasturboladers (20) sperrt.

3. Brennkraftmaschine nach Anspruch 1 oder 2, **dadurch gekennzeichnet, dass** die zweite Ventileinrichtung ein Drosselelement (92) mit Abdeckklappe (86) umfasst, wobei die Abdeckklappe (86) derart angeordnet und ausgebildet ist, dass diese eine Öffnung (74) des Drosselelementes (92) wahlweise öffnet oder verschließt.

4. Brennkraftmaschine nach wenigstens einem der vorhergehenden Ansprüche, **dadurch gekennzeichnet, dass** die erste Ventileinrichtung (72, 94) und die zweite Ventileinrichtung (74, 86, 92) derart miteinander gekoppelt sind, dass die zweite Ventileinrichtung (74, 86, 92) die zweite Leitung (70) verschließt, wenn die erste Ventileinrichtung (72, 94) die erste Leitung (68) öffnet und die zweite Ventileinrichtung (74, 86, 92) die zweite Leitung (70) öffnet, wenn die erste Ventileinrichtung (72, 94) die erste Leitung (68) verschließt.

5. Brennkraftmaschine nach Anspruch 4, **dadurch gekennzeichnet, dass** die erste Ventileinrichtung (72, 94) und die zweite Ventileinrichtung (74, 86, 92) mechanisch über ein Koppelelement (82) miteinander gekoppelt sind.

6. Brennkraftmaschine nach Anspruch 5, **dadurch gekennzeichnet, dass** die mechanische Kopplung der ersten Ventileinrichtung (72, 94) und zweiten Ventileinrichtung (74, 86, 92) eine um ein festes Schwenkgelenk (84) schwenkbar gelagerte Welle (82) umfasst, an deren Enden jeweils die erste Ventileinrichtung (72, 94) bzw. zweite Ventileinrichtung (74, 86, 92) angeordnet ist.

7. Brennkraftmaschine nach wenigstens einem der Ansprüche 5 oder 6, **dadurch gekennzeichnet, dass** das Koppelelement (82) mit einem Stellelement (98, 100) verbunden ist, welches derart ausgebildet und angeordnet ist, dass dieses Stellelement (98, 100) entweder nur die Endanschläge des Koppelelementes (82) sichert und/oder die Bewegung des Koppelelementes (82) zum Öffnen bzw. Schließen des ersten Ventilelementes (72, 94) und zweiten Ventilelementes (74, 86, 92) unterstützt.

8. Brennkraftmaschine nach Anspruch 7, **dadurch gekennzeichnet, dass** das Stellelement ein Aktuator (98, 100), insbesondere eine pneumatische Hubdose, ein E-Steller oder ein Magnetschalter, ist.

9. Brennkraftmaschine nach wenigstens einem der vorhergehenden Ansprüche, **dadurch gekennzeichnet, dass** in der ersten Leitung (68) beidseits des ersten Ventilelements (72, 94) jeweils ein Drucksensor (102) angeordnet ist.

10. Brennkraftmaschine nach wenigstens einem der vorhergehenden Ansprüche, **dadurch gekennzeichnet, dass** an der Abgasleitung (50, 52) wenigstens eine Schaltklappe (62, 64) derart angeordnet und ausgebildet ist, dass diese wahlweise den Abgaskrümmer (46, 48) entweder nur mit der ersten Turbine (16) des ersten Abgasturboladers (14) oder sowohl mit der ersten Turbine (16) des ersten Abgasturboladers (14) als auch über die Abgasleitung (50, 52) mit der zweiten Turbine (22) des zweiten Abgasturboladers (20) verbindet.

11. Verfahren zum Betreiben einer Brennkraftmaschine, insbesondere für ein Kraftfahrzeug,
- wobei während des Betriebs der Brennkraftmaschine eine Turbine eines ersten Abgasturboladers permanent mit Abgas beaufschlagt wird und
- wobei eine Turbine eines zweiten Abgasturboladers wahlweise in Abhängigkeit von einem Betriebszustand der Brennkraftmaschine mit Abgas beaufschlagt wird,
- wobei ein Druckausgang eines Verdichters des zweiten Abgasturboladers entweder mit einem Saugeingang eines Verdichters des ersten Abgasturboladers verbunden wird, wenn ein Ladeluftdruck am Druckausgang des Verdichters des zweiten Abgasturboladers kleiner ist als ein Ladeluftdruck an einem Druckausgang des Verdichters des ersten Abgasturboladers
- oder mit dem Druckausgang des Verdichters des ersten Abgasturboladers verbunden wird, wenn ein Ladeluftdruck am Druckausgang des Verdichters des zweiten Abgasturboladers gleich oder größer ist als ein Ladeluftdruck am Druckausgang des Verdichters des ersten Abgasturboladers,
- wobei ein erster, vorzugsweise als Krümmerhälfte ausgebildeter Abgaskrümmer und ein zweiter, vorzugsweise als Krümmerhälfte ausgebildeter Abgaskrümmer Arbeitszylinder der Brennkraftmaschine mit der ersten Turbine des ersten Abgasturboladers verbinden und
- wobei der erste Abgaskrümmer über eine erste Abgasleitung und der zweite Abgaskrümmer über eine zweite Abgasleitung mit der zweiten Turbine des zweiten Abgasturboladers verbindbar ist, **dadurch gekennzeichnet,**
- **dass** eine erste Abgasklappe (62) vorgesehen ist, welche den ersten Abgaskrümmer (46) wahlweise mit der ersten Abgasleitung (50) verbindet oder beide (46,50) voneinander trennt und eine zweite Abgasklappe (64), welche den zweiten Abgaskrümmer (48) wahlweise mit der zweiten Abgasleitung (52) verbindet oder beide (48,52) voneinander trennt.

12. Verfahren nach Anspruch 11, **dadurch gekennzeichnet, dass** die Turbine des zweiten Abgasturboladers mit Abgas beaufschlagt wird, wenn ein Luftmassenstrombedarf der Brennkraftmaschine nicht mehr allein von dem ersten Abgasturbolader bedient werden kann.

## Claims

1. Internal combustion engine, in particular for a motor vehicle, having, at least one first exhaust-gas turbocharger (14) which has at least one first turbine (16) and at least one first compressor (18), at least one second exhaust-gas turbocharger (20) which has at least one second turbine (22) and at least one second compressor (24),
- wherein a pressure outlet (66) of the second compressor (24) of the second exhaust-gas turbocharger (20) is connected via at least one first line (68) to a pressure outlet (42) of the first compressor (18) of the first exhaust-gas turbocharger (14) and via at least one second line (70) to a suction inlet (32) of the first compressor (18) of the first exhaust-gas turbocharger (14),
- wherein at least one first valve device (72, 94) is arranged in the first line (68) and at least one second valve device (74, 86, 92) is arranged in the second line (70),
- wherein the first valve device (72, 94) is formed so as to close off the first line (68) if a charge air pressure at the pressure outlet (66) of the second compressor (24) of the second exhaust-gas turbocharger (20) is lower than a charge air pressure at the pressure outlet (42) of the first compressor (18) of the first exhaust-gas turbocharger (14)
- and opens the first line (68) if a charge air pressure at the pressure outlet (66) of the second compressor (24) of the second exhaust-gas turbocharger (20) is equal to or greater than a charge air pressure at the pressure outlet (42) of the first compressor (18) of the first exhaust-gas turbocharger (14), and
- wherein the second valve device (74, 86, 92) is formed so as to open the second line (70) if a charge air pressure at the pressure outlet (66) of the second compressor (24) of the second exhaust-gas turbocharger (20) is lower than a charge air pressure at the pressure outlet (42) of the first compressor (18) of the first exhaust-gas turbocharger (14)
- and closes off the second line (70) if a charge air pressure at the pressure outlet (66) of the second compressor (24) of the second exhaust-gas turbocharger (20) is equal to or greater than a charge air pressure at the pressure outlet (42) of the first compressor (18) of the first exhaust-gas turbocharger (14), wherein
- a first exhaust manifold (46), formed preferably as a manifold half, and a second exhaust manifold (48), formed preferably as a manifold half, connect the working cylinders (12) to the first turbine (16) of the first exhaust-gas turbocharger (14),
- and the first exhaust manifold (46) can be connected via a first exhaust line (50), and the second exhaust manifold (48) can be connected via a second exhaust line (52), to the second turbine (22) of the second exhaust-gas turbocharger (20), **characterized**
- **in that** a first exhaust-gas flap (62) is provided which selectively connects the first exhaust manifold (46) to the first exhaust line (50) or separates the two (46, 50) from one' another, and a second exhaust-gas flap (64) is provided which selectively connects the second exhaust manifold (48) to the second exhaust line (52) or separates the two (48, 52) from one another.

2. Internal combustion engine according to Claim 1, **characterized in that** the first valve device comprises a check valve (72, 94) which is arranged and formed such that the check valve (72, 94) blocks the first line (68) so as to prevent a flow in the direction of the pressure outlet (66) of the compressor (24) of the second exhaust-gas turbocharger (20).

3. Internal combustion engine according to Claim 1 or 2, **characterized in that** the second valve device comprises a throttle element (92) with a cover flap (86), wherein the cover flap (86) is arranged and formed such that it selectively opens or closes off an opening (74) of the throttle element (92).

4. Internal combustion engine according to at least one of the preceding claims, **characterized in that** the first valve device (72, 94) and the second valve device (74, 86, 92) are coupled to one another in such a way that the second valve device (74, 86, 92) closes off the second line (70) when the first valve device (72, 94) opens the first line (68), and the second valve device (72, 86, 92) opens the second line (70) when the first valve device (72, 94) closes off the first line (68).

5. Internal combustion engine according to Claim 4, **characterized in that** the first valve device (72, 94) and the second valve device (74, 86, 92) are mechanically coupled to one another via a coupling element (82).

6. Internal combustion engine according to Claim 5, **characterized in that** the mechanical coupling of the first valve device (72, 94) and second valve device (74, 86, 92) comprises a shaft (82) which is mounted so as to be pivotable about a fixed pivot joint (84), on the ends of which shaft are arranged in each case the first valve device (72; 94) and the second valve device (74, 86, 92).

7. Internal combustion engine according to at least one of Claims 5 or 6, **characterized in that** the coupling element (82) is connected to a control element (98, 100) which is formed and arranged such that said control element (98, 100) either merely secures the end stops of the coupling element (82) and/or assists the movement of the coupling element (82) for the opening or closing of the first valve element (72, 94) and second valve element (74, 86, 92).

8. Internal combustion engine according to Claim 7, **characterized in that** the control element is an actuator (98, 100), in particular a pneumatic stroke capsule, an electric actuator or a magnetic switch.

9. Internal combustion engine according to at least one of the preceding claims, **characterized in that**, in the first line (68), in each case one pressure sensor (102) is arranged at both sides of the first valve element (72, 94).

10. Internal combustion engine according to at least one of the preceding claims, **characterized in that** a switching flap (62, 64) is arranged and formed on the exhaust line (50, 52) that said switching flap selectively connects the exhaust manifold (46, 48) either only to the first turbine (16) of the first exhaust-gas turbocharger (14) or both to the first turbine (16) of the first exhaust-gas turbocharger (14) and also via the exhaust line (50, 52) to the second turbine (22) of the second exhaust-gas turbocharger (20).

11. Method for operating an internal combustion engine, in particular for a motor vehicle,
- wherein, during the operation of the internal combustion engine, a turbine of a first exhaust-gas turbocharger is impinged on permanently by exhaust gas, and
- wherein a turbine of a second exhaust-gas turbocharger is impinged on by exhaust gas selectively as a function of an operating state of the internal combustion engine,
- wherein a pressure outlet of a compressor of the second exhaust-gas turbocharger is either connected to a suction inlet of a compressor of the first exhaust-gas turbocharger if a charge air pressure at the pressure outlet of the compressor of the second exhaust-gas turbocharger is lower than a charge air pressure at a pressure outlet of the compressor of the first exhaust-gas turbocharger
- or is connected to the pressure outlet of the compressor of the first exhaust-gas turbocharger if a charge air pressure at the pressure outlet of the compressor of the second exhaust-gas turbocharger is equal to or greater than a charge air pressure at the pressure outlet of the compressor of the first exhaust-gas turbocharger,
- wherein a first exhaust manifold, formed preferably as a manifold half, and a second exhaust manifold, formed preferably as a manifold half, connect working cylinders of the internal combustion engine to the first turbine of the first exhaust-gas turbocharger and
- wherein the first exhaust manifold can be connected via a first exhaust line, and the second exhaust manifold can be connected via a second exhaust line to the second turbine of the second exhaust-gas turbocharger, characterized
- in that a first exhaust-gas flap (62) is provided which selectively connects the first exhaust manifold (46) to the first exhaust line (50) or separates the two (46, 50) from one another, and a second exhaust-gas flap (64) is provided which selectively connects the second exhaust manifold (48) to the second exhaust line (52) or separates the two (48, 52) from one another.

12. Method according to Claim 11, **characterized in that** the turbine of the second exhaust-gas turbocharger is impinged on by exhaust gas if an air mass flow demand of the internal combustion engine can no longer be met by the first exhaust-gas turbocharger alone.

## Revendications

1. Moteur à combustion interne, en particulier pour un véhicule automobile, comprenant au moins un premier turbocompresseur à gaz d'échappement (14), qui présente au moins une première turbine (16) et au moins un premier compresseur (18), au moins un deuxième turbocompresseur à gaz d'échappement (20) qui présente au moins une deuxième turbine (22) et au moins un deuxième compresseur (24),
- une sortie de pression (66) du deuxième compresseur (24) du deuxième turbocompresseur à gaz d'échappement (20) étant connectée par le biais d'au moins une première conduite (68) à une sortie de pression (42) du premier compresseur (18) du premier turbocompresseur à gaz d'échappement (14) et par le biais d'au moins une deuxième conduite (70) à une entrée d'admission (32) du premier compresseur (18) du premier turbocompresseur à gaz d'échappement (14),
- au moins un premier dispositif de soupape (72, 94) étant disposé dans la première conduite (68) et au moins un deuxième dispositif de soupape (74, 86, 92) étant disposé dans la deuxième conduite (70),
- le premier dispositif de soupape (72, 94) étant réalisé de telle sorte que celui-ci ferme la première conduite (68) lorsqu'une pression d'air de suralimentation à la sortie de pression (66) du deuxième compresseur (24) du deuxième turbocompresseur à gaz d'échappement (20) est inférieure à une pression d'air de suralimentation à la sortie de pression (42) du premier compresseur (18) du premier turbocompresseur à gaz d'échappement (14),
- et ouvre la première conduite (68) lorsqu'une pression d'air de suralimentation à la sortie de pression (66) du deuxième compresseur (24) du deuxième turbocompresseur à gaz d'échappement (20) est supérieure ou égale à une pression d'air de suralimentation à la sortie de pression (42) du premier compresseur (18) du premier turbocompresseur à gaz d'échappement (14) et
- le deuxième dispositif de soupape (74, 86, 92) étant réalisé de telle sorte que celui-ci ouvre la deuxième conduite (70) lorsqu'une pression d'air de suralimentation à la sortie de pression (66) du deuxième compresseur (24) du deuxième turbocompresseur à gaz d'échappement (20) est inférieure à une pression d'air de suralimentation à la sortie de pression (42) du premier compresseur (18) du premier turbocompresseur à gaz d'échappement (14),
- et ferme la deuxième conduite (70) lorsqu'une pression d'air de suralimentation à la sortie de pression (66) du deuxième compresseur (24) du deuxième turbocompresseur à gaz d'échappement (20) est supérieure ou égale à une pression d'air de suralimentation à la sortie de pression (42) du premier compresseur (18) du premier turbocompresseur à gaz d'échappement (14),
- un premier collecteur de gaz d'échappement (46) réalisé de préférence sous forme de moitié de collecteur, et un deuxième collecteur de gaz d'échappement (48) réalisé de préférence sous forme de moitié de collecteur, reliant les cylindres de travail (12) à la première turbine (16) du premier turbocompresseur à gaz d'échappement (14),
- et le premier collecteur de gaz d'échappement (46) pouvant être connecté par le biais d'une première conduite de gaz d'échappement (50) et le deuxième collecteur de gaz d'échappement (48) pouvant être connecté par le biais d'une deuxième conduite de gaz d'échappement (52) à la deuxième turbine (22) du deuxième turbocompresseur à gaz d'échappement (20), **caractérisé en ce**
- **qu'**un premier clapet de gaz d'échappement (62) est prévu, lequel relie le premier collecteur de gaz d'échappement (46) de manière sélective à la première conduite de gaz d'échappement (50) ou les sépare l'un de l'autre (46, 50), et un deuxième clapet de gaz d'échappement (64) est prévu, lequel relie le deuxième collecteur de gaz d'échappement (48) de manière sélective à la deuxième conduite de gaz d'échappement (52) ou les sépare l'un de l'autre (48, 52).

2. Moteur à combustion interne selon la revendication 1, **caractérisé en ce que** le premier dispositif de soupape comprend un clapet antiretour (72, 94), qui est disposé et réalisé de telle sorte que le clapet antiretour (72, 94) bloque la première conduite (68) contre un écoulement dans la direction de la sortie de pression (66) du compresseur (24) du deuxième turbocompresseur à gaz d'échappement (20).

3. Moteur à combustion interne selon la revendication 1 ou 2, **caractérisé en ce que** le deuxième dispositif de soupape comprend un élément d'étranglement (92) avec un clapet de recouvrement (86), le clapet de recouvrement (86) étant disposé et réalisé de telle sorte qu'il ouvre ou ferme de manière sélective une ouverture (74) de l'élément d'étranglement (92).

4. Moteur à combustion interne selon au moins l'une quelconque des revendications précédentes, **caractérisé en ce que** le premier dispositif de soupape (72, 94) et le deuxième dispositif de soupape (74, 86, 92) sont accouplés l'un à l'autre de telle sorte que le deuxième dispositif de soupape (74, 86, 92) ferme la deuxième conduite (70) lorsque le premier dispositif de soupape (72, 94) ouvre la première conduite (68) et que le deuxième dispositif de soupape (74, 86, 92) ouvre la deuxième conduite (70) lorsque le premier dispositif de soupape (72, 94) ferme la première conduite (68).

5. Moteur à combustion interne selon la revendication 4, **caractérisé en ce que** le premier dispositif de soupape (72, 94) et le deuxième dispositif de soupape (74, 86, 92) sont accouplés l'un à l'autre mécaniquement par le biais d'un élément d'accouplement (82).

6. Moteur à combustion interne selon la revendication 5, **caractérisé en ce que** l'accouplement mécanique du premier dispositif de soupape (72, 94) et du deuxième dispositif de soupape (74, 86, 92) comprend un arbre (82) monté de manière pivotante autour d'une articulation pivotante (84) fixe, aux extrémités duquel est à chaque fois disposé le premier dispositif de soupape (72, 94) respectivement le deuxième dispositif de soupape (74, 86, 92).

7. Moteur à combustion interne selon au moins l'une quelconque des revendications 5 ou 6, **caractérisé en ce que** l'élément d'accouplement (82) est connecté à un élément de commande (98, 100) qui est réalisé et disposé de telle sorte que cet élément de commande (98, 100) ne fixe que les butées de fin de course de l'élément d'accouplement (82) et/ou ne supporte que le mouvement de l'élément d'accouplement (82) pour l'ouverture ou la fermeture du premier élément de soupape (72, 94) et du deuxième élément de soupape (74, 86, 92).

8. Moteur à combustion interne selon la revendication 7, **caractérisé en ce que** l'élément de commande est un actionneur (98, 100), en particulier une boîte de levage pneumatique, un actionneur électronique ou un commutateur magnétique.

9. Moteur à combustion interne selon au moins l'une quelconque des revendications précédentes, **caractérisé en ce qu'**un capteur de pression (102) est à chaque fois disposé dans la première conduite (68) de chaque côté du premier élément de soupape (72, 94).

10. Moteur à combustion interne selon au moins l'une quelconque des revendications précédentes, **caractérisé en ce qu'**au moins un clapet de commutation (62, 64) est disposé et réalisé sur la conduite de gaz d'échappement (50, 52), de telle sorte que celui-ci ne relie de manière sélective le collecteur de gaz d'échappement (46, 48) qu'à la première turbine (16) du premier turbocompresseur à gaz d'échappement (14) ou à la fois à la première turbine (16) du premier turbocompresseur à gaz d'échappement (14) et par le biais de la conduite de gaz d'échappement (50, 52) à la deuxième turbine (22) du deuxième turbocompresseur à gaz d'échappement (20).

11. Procédé pour faire fonctionner un moteur à combustion interne, en particulier pour un véhicule automobile,
- dans lequel, pendant le fonctionnement du moteur à combustion interne, une turbine d'un premier turbocompresseur à gaz d'échappement est sollicitée en permanence avec du gaz d'échappement, et
- dans lequel une turbine d'un deuxième turbocompresseur à gaz d'échappement est sollicitée de manière sélective en fonction d'un état de fonctionnement du moteur à combustion interne avec du gaz d'échappement,
- dans lequel une sortie de pression d'un compresseur du deuxième turbocompresseur à gaz d'échappement est connectée soit à une entrée d'admission d'un compresseur du premier turbocompresseur à gaz d'échappement, lorsqu'une pression d'air de suralimentation à la sortie de pression du compresseur du deuxième turbocompresseur à gaz d'échappement est inférieure à une pression d'air de suralimentation à une sortie de pression du compresseur du premier turbocompresseur à gaz d'échappement,
- soit est connectée à la sortie de pression du compresseur du premier turbocompresseur à gaz d'échappement lorsqu'une pression d'air de suralimentation à la sortie de pression du compresseur du deuxième turbocompresseur à gaz d'échappement est supérieure ou égale à une pression d'air de suralimentation à la sortie de pression du compresseur du premier turbocompresseur à gaz d'échappement,
- dans lequel un premier collecteur de gaz d'échappement réalisé de préférence sous forme de moitié de collecteur et un deuxième collecteur de gaz d'échappement réalisé de préférence sous forme de moitié de collecteur relient des cylindres de travail du moteur à combustion interne à la première turbine du premier turbocompresseur à gaz d'échappement et
- dans lequel le premier collecteur de gaz d'échappement peut être connecté par le biais d'une première conduite de gaz d'échappement et le deuxième collecteur de gaz d'échappement peut être connecté par le biais d'une deuxième conduite de gaz d'échappement à la deuxième turbine du deuxième turbocompresseur à gaz d'échappement, **caractérisé en ce**
- **qu'**un premier clapet de gaz d'échappement (62) est prévu, lequel relie le premier collecteur de gaz d'échappement (46) de manière sélective à la première conduite de gaz d'échappement (50) ou les sépare l'un de l'autre (46, 50), et un deuxième clapet de gaz d'échappement (64) est prévu, lequel relie le deuxième collecteur de gaz d'échappement (48) de manière sélective à la deuxième conduite de gaz d'échappement (52) ou les sépare l'un de l'autre (48, 52).

12. Procédé selon la revendication 11, **caractérisé en ce que** la turbine du deuxième turbocompresseur à gaz d'échappement est sollicitée avec du gaz d'échappement, lorsqu'un besoin en débit massique d'air du moteur à combustion interne ne peut plus être utilisé seulement par le premier turbocompresseur à gaz d'échappement..
